# EUROPEAN PATENT SPECIFICATION

(11) **EP 2 582 184 B1**
(45) Date of publication and mention of the grant of the patent: **05.12.2018**
(21) Application number: 11791918.3
(22) Date of filing: 03.06.2011
(51) Int. Cl.: H04W 72/04, H04W 84/04, H04B 7/15, H04W 92/20

(54) **METHOD AND APPARATUS FOR REALIZING RESOURCE STATUS MAPPING PROCEDURE**
VERFAHREN UND VORRICHTUNG ZUM BEREITSTELLEN EINES RESSOURCENZUSTANDSABBILDUNGSPROZESSES
PROCÉDÉ ET APPAREIL POUR RÉALISER UNE PROCÉDURE DE MAPPAGE DE L'ÉTAT DE RESSOURCES

(30) Priority: 25.05.2011 CN 201110137108; 12.06.2010 CN 201010205985
(43) Date of publication of application: 17.04.2013
(73) Proprietor: China Academy of Telecommunications Technology, Hai Dian District Beijing 100191 (CN)
(72) Inventor: ZHANG, Dajun, Beijing 100191 (CN); LI, Guoqing, Beijing 100191 (CN); BAO, Wei, Beijing 100191 (CN)
(74) Representative: Lantos, Mihaly
(86) International application number: PCT/CN2011/075323
(87) International publication number: WO 2011/153927

(56) References cited:
- CN-A- 101 600 226
- QUALCOMM INCORPORATED: "On the X2 Proxy in DeNB", 3GPP DRAFT; R3-101600, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG3, no. Montreal, Canada; 20100510, 1 May 2010 (2010-05-01), XP050425349, [retrieved on 2010-05-01]
- HUAWEI: "X2 interface analysis for relay", 3GPP DRAFT; R3-092190, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, no. Miyazaki; 20091012, 12 October 2009 (2009-10-12), XP050391740, [retrieved on 2009-10-02]
- "LTE; Evolved Universal Terrestrial Radio Access Network (E- UTRAN); X2 Application Protocol (X2AP) (3GPP TS 36.423 version 9.2.0 Release 9)", TECHNICAL SPECIFICATION, EUROPEAN TELECOMMUNICATIONS STANDARDS INSTITUTE (ETSI), 650, ROUTE DES LUCIOLES ; F-06921 SOPHIA-ANTIPOLIS ; FRANCE, vol. 3GPP RAN 3, no. V9.2.0, 1 April 2010 (2010-04-01), XP014046924,
- '3GPP TS 36.423 V8.4.0 3rd Generation Partnership Project; Technical Specification Group Radio Access Network; Evolved Universal Terrestrial Radio Access Network (E-UTRAN); X2 application protocol (X2AP) (Release 8)' 3RD GENERATION PARTNERSHIP PROJECT (3GPP); TECHNICAL SPECIFICATION (TS) December 2008, pages 1 - 89, XP050377734

## Description

### Field of the invention

The present invention relates to the field of communication technology, in particular to methods and apparatuses for realizing resource status mapping procedure.

### Background of the invention

LTE (Long Term Evolution) evolves from 3G (3rd Generation), which improves and strengthens air access technology of 3G, and provides peak rate of 100Mbit/s at downlink and 50Mbit/s at uplink under 20MHz spectral bandwidth to improve the performance of edge user of a cell, improves cell capability and reduces system delaying.

With rapid growth of a large number of mobile terminal users, service arising from these terminal users increases exponentially. To meet increasing service requirements of terminal users, it is necessary to provide the greater bandwidth to meet higher peak rate for terminal users' service and application. That is to say, in the future mobile communication system, such as B3G (Beyond three Generation) and LTE-A (LTE-Advanced), the system will provide higher peak data rate and cell throughput and require larger bandwidth at the same time. At present, little room for assigning new bandwidths less than 2GHz is available. Therefore, part of or all bandwidths required by B3G system (take B3G system as an example) can only be found at higher frequency band, such as frequency band above 3GHz. In practical application, the attenuation of radio propagation will become faster and transmission distance will become shorter with higher frequency band. That is to say, more eNBs are required in the same coverage area to ensure continuous coverage. However, it costs too much to build an eNB as well known in the art. Therefore, it certainly increases the cost of network buildup when many eNBs are required. To solve the above problem, manufacturers and organizations for standardization introduce many kinds of relay devices into cellular system, so as to increase its coverage area.

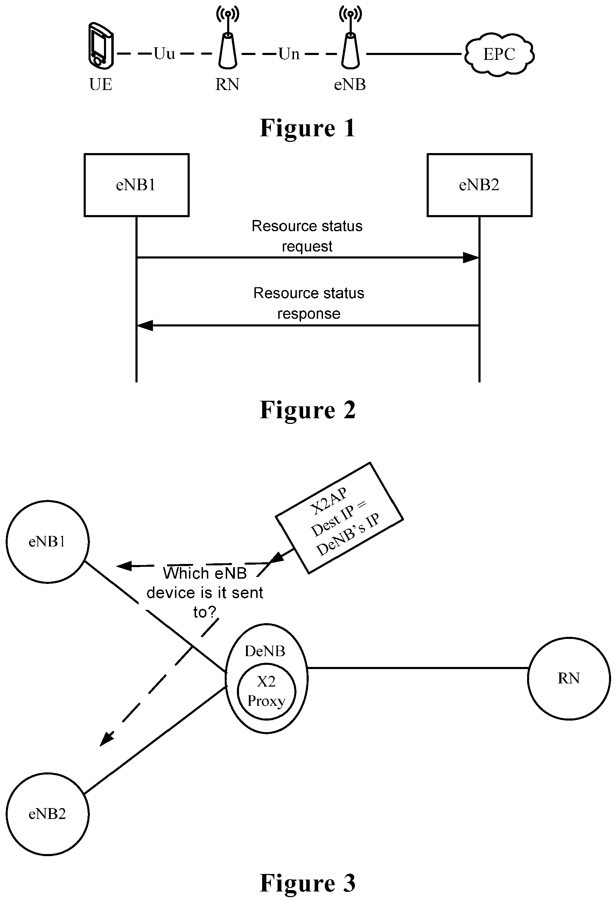

Network architecture after an RN (Relay Node) is introduced into an LTE-A system is shown in Figure 1. The RN is connected to a core net through a donor cell under an eNB (Evolved Node B) and has no direct wired interface with the core net. The RN can control one or more cells.

Under the above network architecture, the interface between a UE (User Equipment) and the RN is called as a Uu interface, while the one between the RN and the DeNB (Donor Evolved Node B) is called as a Un interface. One DeNB can be connected to multiple RNs, while one RN can only be connected to one DeNB.

The diagram of resource status realizing procedure according to the present technology is shown in Figure 2, including: eNB1 sends RESOURCE STATUS REQUEST message to eNB2; and eNB2 returns RESOURCE STATUS RESPONSE message to eNB1.

After studying, inventors found out there are at least such problems according to the present technology as below. In the present LTE system, the Measurement ID is used in a resource status request message to identify/indicate each resource status request message. With the deployment of relay devices, if it needs to implement a resource status report procedure among different DeNBs, target cell identification can be used as routing information, thus DeNBs can send resource status request message to a target node according to such identification.

However, one DeNB is only used for transparent transmission without address information of source node. For the returned resource status response message and subsequent status report procedure, it may fail to find out a correct source node due to the fact that address information of the source nodes is not specified/indicated, and may result in routing failure as shown in Figure 3.

Non-patent literature named "On the X2 Proxy in DeNB", 3GPP DRAFT; R3-101600 relates to an issue for the X2 Proxy to be deployed to terminate the X2 interface at the DeNB. The legacy X2 interface breaks when an X2 Proxy is deployed to terminate the X2 interface at the DeNB. It proposes RAN3 to discuss the X2 routing through the DeNB X2 proxy problem.

### Summary of the Invention

The present invention provides methods and apparatuses for realizing resource status mapping procedure, so as to route the resource status response message and the status report to the correct source eNB.

To achieve the above objective, one embodiment of the present invention provides a method for realizing a resource status mapping procedure, which includes: receiving, by a Donor evolved Node B, DeNB, a resource status request message from a source evolved Node B, eNB, wherein the resource status request message includes cell information to be reported; allocating, by the DeNB, a Measurement ID to the source eNB in accordance with the resource status request message; and sending, by the DeNB, the resource status request message carrying the Measurement ID to a Relay Node, RN.

Furthermore, another embodiment of the present invention provides an apparatus for realizing a resource status mapping procedure, which includes: a reception module, which is configured to receive a resource status request message from a source evolved Node B, eNB, wherein the resource status request message includes cell information to be reported; a processing module, which is configured to allocate a Measurement ID to the source eNB in accordance with the resource status request message received by the reception module; and a sending module, which is configured to send the resource status request message carrying the Measurement ID to a Relay Node, RN.

Furthermore, still another embodiment of the present invention provides a method for realizing a resource status mapping procedure, which includes: acquiring, by a source evolved Node B, eNB, a resource status request message, wherein the resource status request message includes cell information to be reported; sending, by the source eNB, the resource status request message to a Donor evolved Node B, DeNB; and receiving, by the source eNB, resource status information returned by the DeNB according to the context information.

Furthermore, yet still another embodiment of the present invention provides an apparatus for realizing a resource status mapping procedure, which includes: an acquisition module, which is configured to acquire a resource status request message, wherein the resource status request message includes cell information to be reported; a sending module, which is configured to send the resource status request message acquired by the acquisition module to a Donor evolved Node B, DeNB; and a reception module, which is configured to receive resource status information returned by the DeNB according to the context information.

Compared with the present technology, the embodiments of the present invention can at least achieve the following advantages: context information for the source eNBs is established at the DeNB, so as to enable the DeNB to route resource status response message or status report to the correct source eNB.

### Brief description of the drawings

Figure 1 is a diagram of network architecture after an RN is introduced into the LTE-A system according to the present technology;
Figure 2 is a diagram of resource status realizing procedure according to the present technology;
Figure 3 is a diagram of routing failure according to the present technology;
Figure 4 is a flow chart of a method for realizing resource status mapping procedure provided by Embodiment I of the present invention;
Figure 5 is a flow chart of another method for realizing resource status mapping procedure provided by Embodiment II of the present invention;
Figure 6 is a flow chart of mapping procedure of Measurement ID in Embodiment II of the present invention;
Figure 7 is a flow chart of another method for realizing resource status mapping procedure provided by Embodiment III of the present invention;
Figure 8 is a structure diagram of an apparatus for realizing resource status mapping procedure provided by Embodiment IV of the present invention; and
Figure 9 is a structure diagram of another apparatus for realizing resource status mapping procedure provided by Embodiment V of the present invention.

### Detailed description of the embodiments of the present invention

In an LTE-A system, one or more RNs are introduced to increase network coverage. These RNs are connected with a DeNB wirelessly. The DeNB can terminate or agent all signaling messages from an X2 interface. To solve the problem that the DeNB fails to route resource status response message and status report to the correct source eNB according to the present technology, the embodiments of the present invention provide methods and apparatuses for realizing a resource status mapping procedure to enable the DeNB (agent node) to correctly route resource status response message and status report to a source node through termination mapping mechanism for the resource status mapping procedure.

### Embodiment I

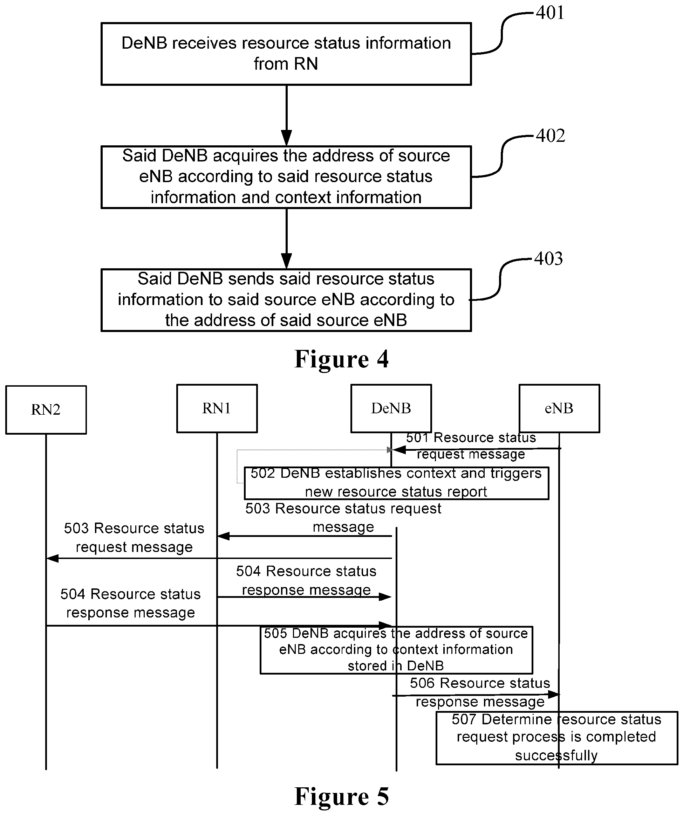

The embodiments of the present invention provide the method for a resource status mapping procedure as shown in Figure 4, which comprises the following steps:
Step 401: a DeNB receives resource status information from an RN.
Step 402: The DeNB acquires the address of source eNB according to the resource status information and context information.
Step 403: The DeNB sends the resource status information to the source eNB according to the address of the source eNB. The resource status information includes: resource status response message or resource status report.

In the embodiments of the present invention, prior to the DeNB receiving resource status information from the RN, the method further includes: the DeNB receives resource status request message from the source eNB; the resource status request message contains the cell information to be reported; the DeNB allocates Measurement ID for the source eNB in accordance with the resource status request message, and establishes context information for the source eNB, and the corresponding relation between the allocated Measurement ID and the source eNB is stored in the context information; the DeNB sends the resource status request message to the RN.

Furthermore, the DeNB establishes context information for the source eNB, including: if the cell information to be reported corresponds to multiple RNs, the DeNB establishes context information of Measurement ID corresponding to those of multiple RNs for the source eNB; or, if the cell information to be reported corresponds to one RN, the DeNB establishes context information of Measurement ID corresponding to that of one RN for the source eNB.

The DeNB sends resource status request message to the RN, including: if the cell information to be reported corresponds to multiple RNs, the DeNB sets up resource status request message corresponding to each RN according to resource status request message from the source eNB, and sends corresponding resource status request message to each RN respectively; if the cell information to be reported corresponds to one RN, the DeNB sends resource status request message from the source eNB directly to RN.

In the embodiments of the present invention, the DeNB acquires the address of the source eNB according to the resource status information and the context information, including: the DeNB acquires the Measurement ID according to the resource status information, and the address of the source eNB according to the Measurement ID and corresponding relationship between the Measurement ID and the source eNB stored in the context information.

The DeNB sends resource status information to the source eNB according to the address of the source eNB, including: if the cell information to be reported corresponds to multiple RNs, the DeNB sets up uniform resource status information according to respective resource status information from the multiple RNs and sends the uniform resource status information to the source eNB according to the address of the source eNB; or, if the cell information to be reported corresponds to one RN, the DeNB sends the resource status information from the RN directly to the source eNB according to the address of the source eNB.

Therefore, it can be appreciated that in the embodiments of the present invention, by establishing context information for the source eNBs at a DeNB, the DeNB can route resource status response message or resource status report to a correct source eNB.

To explain the technical solution provided by the embodiments of the present invention more clearly, the method for the resource status mapping procedure will be expounded below in combination with a specific embodiment. The termination of resource status procedure at the DeNB is explained in the embodiments of the present invention.

It should be noted that technical solutions provided by the embodiments of the present invention can be applied to routing procedures of resource status response message, status report or other messages according to actual requirements. To facilitate description, the procedure for processing resource status response message shall be taken as an example to explain in the embodiments of the present invention, while the method for processing status report is not expounded herein for it is the same as that of resource status response message.

### Embodiment II

As shown in Figure 5, Embodiment II of the present invention provides the method for a resource status mapping procedure, which comprises the following steps:
Step 501: an eNB sends its resource status request message to a DeNB.

To be specific, according to the load equal distribution strategy, when the eNB determines to initiate a resource status report procedure, it is necessary for the eNB to send its resource status request message to the DeNB and specifies a list of all cells to be reported in the resource status request message as shown in Table 1.

**Table 1**

| Cell To Report | | 1 to maxCellineNB | | Cell ID list for which measurement is needed |
|---|---|---|---|---|
| >Cell ID | M | | ECGI 9.2.14 | |

Step 502: The DeNB establishes context and triggers a new resource status report.

To be specific, after receiving resource status request message from other eNBs, the DeNB needs to establish context and allocate corresponding Measurement ID. If a target cell belongs to an external node (namely a target RN), it is necessary to complete the procedure of mapping the allocated Measurement ID.

Herein, if there is one target RN, the mapping relationship of Measurement ID can be one-to-one. If there are multiple RNs, the mapping relationship of Measurement ID can be one-to-many.

The cells having target cells as RN1 and RN2 are taken as an example to explain in the embodiments of the present invention. The procedure of mapping Measurement IDs is shown in Table 2.

**Table 2**

| eNB | DeNB | RN1 | RN2 |
|---|---|---|---|
| eNB1 Measurement ID 1 | eNB2 Measurement ID 1 | | |
| | eNB 1 Measurement ID 2 | eNB2 Measurement ID | |
| | eNB 1 Measurement ID 3 | | eNB2 Measurement ID 3 |

Furthermore, it is necessary for the DeNB to trigger new resource status report based on the target cell information in resource status request message. If the target cells are multiple external nodes (namely, RN1 and RN2 are taken as the example in the embodiments of the present invention), the procedure of requesting for multiple resources statuses will be initiated.

Step 503: the DeNB sends resource status request messages to different target RNs respectively.

In the embodiments of the present invention, target RNs are RN1 and RN2. Thus, the DeNB needs to send resource status request messages to RN1 and RN2 respectively.

To be specific, resource status request messages from the eNBs are such messages to RN1 and RN2.

Therefore, the DeNB needs to set up new resource status request messages for RN1 and RN2 respectively and send such messages corresponding to RN1 and RN2 respectively to them.

Step 504: The target RN implements a resource status measurement procedure and returns its resource status response message to the DeNB.

To be specific, after receiving resource status request message from the DeNB, an RN needs to allocate corresponding Measurement ID and set up proper resource status response message, so as to send the proper resource status response message to the DeNB.

In the embodiments of the present invention, RN1 and RN2 will implement the aforesaid operations and return resource status response message to the DeNB respectively.

Step 505: the DeNB acquires the address of source eNB according to the context information stored in the DeNB.

To be specific, due to the fact that the resource status response message carries the information about Measurement ID, the DeNB needs to acquire the address information of source eNB according to context information stored in the DeNB itself and the information about Measurement ID after receiving resource status response messages from all target cells.

Step 506: the DeNB sets up new resource status response message and sends such message to the source eNB according to the acquired address of source eNB.

To be specific, resource status request message from the eNB is such message for RN1 and RN2 simultaneously. Therefore, the DeNB needs to return such message when it returns resource status request message to a specific eNB.

In this step, after resource status response messages from RN1 and RN2 are received, it is necessary to integrate such messages to set up a new resource status response message for RN1 and RN2 and send the new message to the source eNB according to the acquired address of the source eNB.

Step 507: the source eNB receives the resource status response message, so as to determine that the resource status request procedure is completed successfully.

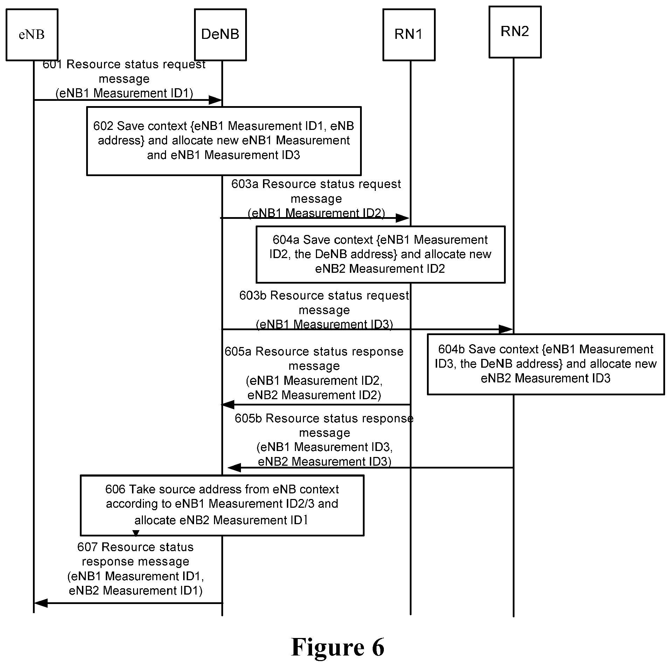

To further explain the method for a resource status mapping procedure provided by Embodiment II of the present invention, the mapping procedure of Measurement ID is further elaborated below, and corresponding mapping procedure for completing Measurement ID mapping is shown in Figure 6, which comprises the following steps:
Step 601: an eNB sends resource status request message to a DeNB. Such message carries therein information about eNB1 Measurement ID1 and Cell ID list to report.
Step 602: the DeNB saves context {eNB1 Measurement ID1, eNB address} and allocates new eNB1 Measurement ID2 and eNB1 Measurement ID3, and determines a target address according to the Cell ID list to report. Herein, eNB1 Measurement ID2 refers to the Measurement ID corresponding to RN1, while eNB 1 Measurement ID3 refers to that corresponding to RN2.
Step 603a: the DeNB sends resource status request message to RN1. Such message carries therein information about eNB 1 Measurement ID2 and Cell ID list to report.
Step 603b: the DeNB sends resource status request message to RN2. Such message carries therein information about eNB 1 Measurement ID3 and Cell ID list to report.
Step 604a: RN1 saves context {eNB1 Measurement ID2, the DeNB address} and allocates new eNB2 Measurement ID2.
Step 604b: RN2 saves context {eNB1 Measurement ID3, the DeNB address} and allocates new eNB2 Measurement ID3.
Step 605a: RN1 sends its resource status response message to the DeNB. Such message carries therein information about (eNB1 Measurement ID2, eNB2 Measurement ID2).
Step 605b: RN2 sends its resource status response message to the DeNB. Such message carries therein information about (eNB1 Measurement ID3, eNB2 Measurement ID3).
Step 606: the DeNB obtains the source address from source eNB according to eNB1 Measurement ID2/3 and allocates eNB2 Measurement ID1.
Step 607: the DeNB sends resource status response message to the eNB. Such message carries therein information about (eNB1 Measurement ID1, eNB2 Measurement ID1).

It can thus be seen that in the embodiments of the present invention, by establishing context information for source eNB at the DeNB, the DeNB can route resource status response message or resource status report to the correct source eNB according to the context information.

### Embodiment III

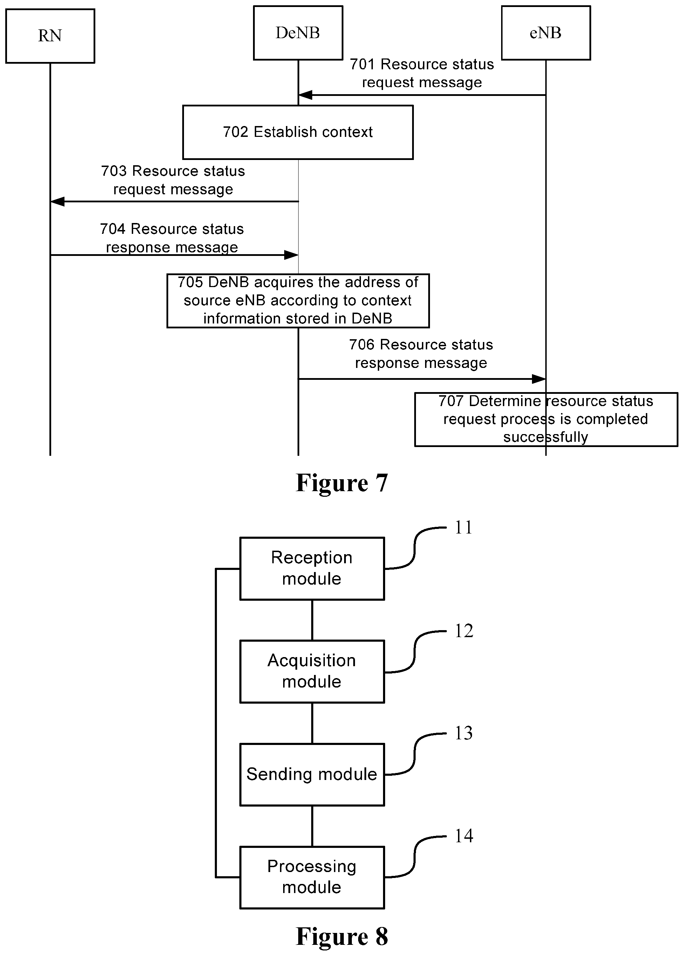

As shown in Figure 7, Embodiment III of the present invention provides one method for a resource status mapping procedure. The termination of resource status procedure in a target cell is taken as an example to explain in the embodiments of the present invention. The method comprises the following steps:
Step 701: an eNB sends its resource status request message to a DeNB.

To be specific, according to the load equal distribution strategy, when the eNB determines to initiate a resource status report procedure, it is necessary for the eNB to send its resource status request message to the DeNB and specifies a list of all cells to be reported in the resource status request message.

It should be noted that in the embodiments of the present invention, the eNB needs to differentiate different target nodes each of which initiates its resource status report procedure independently, and to specify the list of all cells to be reported for the target node during the above procedures.

Step 702: the DeNB establishes context.

To be specific, after receiving the resource status request message from another eNB, the DeNB needs to establish context and allocate corresponding Measurement ID. If a target cell belongs to an external node, it is necessary to complete the procedure of mapping the allocated Measurement ID.

Resource status request message is created for an independently-initiated resource status report procedure for a target node. Therefore, there is one target RN and the mapping relationship of Measurement ID is of a one-to-one relationship as shown in Table 3.

**Table 3**

| eNB | DeNB | RN |
|---|---|---|
| eNB 1 Measurement ID 1 | eNB2 Measurement ID 1 | |
| | eNB 1 Measurement ID 2 | eNB2 Measurement ID 2 |

In the embodiments of the present invention, the mapping procedure of Measurement ID is similar to that of Measurement ID as shown in Figure 6, the only difference therebetween lies in the number of target RNs is changed from two to one as in the embodiments of the present invention. Therefore, it is not described here again.

Step 703: the DeNB sends its resource status request message to a target RN.

Step 704: the target RN implements a resource status measurement procedure and returns its resource status response message to the DeNB.

To be specific, after receiving resource status request message from the DeNB, an RN needs to allocate corresponding Measurement ID and set up proper resource status response message, so as to send the proper resource status response message to the DeNB.

Step 705: the DeNB acquires the address of source eNB according to the context information stored in the DeNB.

To be specific, due to the fact that the resource status response message carries the information about Measurement ID, the DeNB needs to acquire the address information of source eNB according to the context information stored in the DeNB itself and the information about Measurement ID after receiving resource status response message from the target cell.

Step 706: the DeNB sends its resource status response message to the source eNB according to the acquired address of source eNB.

Step 707: the Source eNB receives the resource status response message, so as to determine that the resource status request procedure is completed successfully.

It can thus be seen that in the embodiments of the present invention, by establishing context information for source eNB at the DeNB, the DeNB can route resource status response message or resource status report to the correct source eNB according to the context information.

### Embodiment IV

Based on the same inventive concept as the method mentioned above, Embodiment IV of the present invention also provides an apparatus for the resource status mapping procedure as shown in Figure 8, including:
a reception module 11, which is configured to receive resource status information from an RN;
an acquisition module 12, which is configured to acquire the address of source eNB according to the resource status information and context information received by the reception unit 11; and
a sending module 13, which is configured to send the resource status information to the source eNB according to the address of source eNB acquired by the acquisition unit 12.

In the embodiments of the present invention, the reception module 11 is also configured to receive a resource status request message from the source eNB; such message contains therein cell information to be reported;

The apparatus also includes:
a processing module 14, which is configured to allocate Measurement ID and establish context information for the source eNB according to the resource status request message received by the reception module 11. The context information saves the corresponding relationship between the allocated Measurement ID and the source eNB.

In addition, the sending module 13 is also configured to send the resource status request message to the RN.

Furthermore, the processing module 14 is specifically configured to establish context information of Measurement IDs corresponding to those of multiple RNs for the source eNB if the cell information to be reported corresponds to multiple RNs; or establish context information of Measurement ID corresponding to that of one RN for the source eNB if the cell information to be reported corresponds to one RN.

The sending module 13 is specifically configured to set up resource status request message corresponding to each RN according to resource status request message from the source eNB and send corresponding resource status request message to each RN if the cell information to be reported corresponds to multiple RNs; or send resource status request message from the source eNB directly to the RN if the cell information to be reported corresponds to one RN.

In addition, in the embodiments of the present invention, the acquisition module 12 is specifically configured to acquire the Measurement ID according to the resource status information and the address of the source eNB according to the Measurement ID and corresponding relationship between the Measurement ID and the source eNB stored in the context information.

In addition, in the embodiments of the present invention, the sending module 13 is specifically configured to set up the uniform resource status information according to respective resource status information from the multiple RNs and send the uniform resource status information to the source eNB according to the address of the source eNB, if the cell information to be reported corresponds to multiple RNs.

If the cell information to be reported corresponds to one RN, the sending module 13 is configured to send the resource status information from the RN directly to the source eNB according to address of the source eNB.

In the embodiments of the present invention, the resource status information includes: resource status response message or resource status report.

Herein, modules of the inventive apparatus can be integrated or deployed separately. The modules can be either combined into one module or further decomposed into multiple submodules.

In conclusion, according to the embodiments of the present invention, context information is established for the source eNB at the DeNB, so as to enable the DeNB to route resource status response message or resource status report to the correct source eNB according to the context information.

### Embodiment V

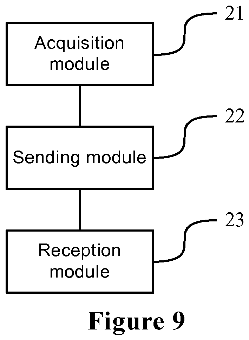

Based on the same inventive concept as the method mentioned above, Embodiment V of the present invention also provides an apparatus for resource status mapping procedure as shown in Figure 9, including:
an acquisition module 21, which is configured to acquire resource status request message; such message contains therein the cell information to be reported;
a sending module 22, which is configured to send the resource status request message acquired by the acquisition module 21 to a DeNB; and
a reception module 23, which is configured to receive resource status information returned by the DeNB according to context information.

In the embodiments of the present invention, the acquisition module 22 is specifically configured to acquire the cell information to be reported from all RNs, and set up resource status request message for such cell information to be reported; or acquire cell information to be reported from each RN, and set up resource status request message for each cell information to be reported for each RN.

In the embodiments of the present invention, the resource status information includes: resource status response message or resource status report.

Herein, modules of the inventive apparatus can be integrated or deployed separately. The modules can be either combined into one module or further decomposed into multiple submodules.

In conclusion, according to the embodiments of the present invention, context information is established for the source eNB at the DeNB, so as to enable the DeNB to route resource status response message or resource status report to the correct source eNB according to the context information.

Through description of the above embodiments, technical personnel of the field can clearly understand that the present invention is realized depending on software and necessary general hardware platform, and also can be realized through hardware, while the former is better in many cases. Based on this understanding, the technical solution of the present invention or the part making contributions to available technology can be essentially reflected by means of software product. This computer software product is stored in a storage medium, including several instructions to enable a computer unit (such as personal computer, sever, or network equipment, etc.) to implement the methods described in all embodiments of the present invention.

Technical personnel of the field can understand that the attached drawings only refer to the diagrams of a preferred embodiment, and the module or procedure included is not necessary for the implementation of the embodiments of the present invention.

Technical personnel of the field can understand that the module of the unit of an embodiment can be distributed in such embodiment's unit according to embodiment description, or located in one or more units of other embodiment through corresponding changes. Modules of the embodiments mentioned above can be merged into one module, or further divided into multi-submodules.

The number of the aforementioned embodiments of the present invention is only for the purpose of description rather than representing advantages or disadvantages.

Only several specific embodiments of the present invention are released above. However, the present invention is not only comprised of those. Any change that technical personnel of the field can predict shall be protected by the present invention.

## Claims

1. A method for realizing a resource status exchanging procedure_in a Long Term Evolution Advanced, LTE-A, system where one or more Relay Nodes, RNs, are connected with a source evolved Node B, eNB, via a Donor evolved Node B, DeNB, the method is **characterized by** comprising:
receiving (S501), by the DeNB, a resource status request message from the source eNB, wherein the resource status request message includes cell information to be reported, wherein the source eNB refers to a sender eNB who sends out the resource status request message, and wherein the cell information refers to state information about a cell where the source eNB is located;
allocating (S502), by the DeNB, a Measurement ID to the source eNB in accordance with the resource status request message;
establishing (S502), by the DeNB, context information for the source eNB, wherein the context information stores therein a corresponding relationship between the allocated Measurement IDs and the source eNB; and
sending (S503), by the DeNB, the resource status request message carrying the Measurement ID to the one or more RNs.

2. The method as claimed in claim 1, wherein the context information further stores therein a corresponding relationship between the allocated Measurement ID and a Measurement ID corresponding to the Measurement ID allocated to the source eNB.

3. The method as claimed in claim 2, wherein subsequent to the sending, by the DeNB, the resource status request message carring the Measurement ID to the RN, the method further comprises:
receiving, by the DeNB, resource status information from the RN, wherein the resource status information carries the allocated Measurement ID;
acquiring, by the DeNB, an address of the source eNB according to the resource status information and the context information; and
sending, by the DeNB, the resource status information carring the allocated Measurement ID of the source eNB to the source eNB according to the address of the source eNB.

4. The method as claimed in claim 3, wherein the acquiring, by the DeNB, the address of the source eNB according to the resource status information and the context information comprises:
acquiring, by the DeNB, the allocated Measurement ID according to the resource status information, and acquiring the address of the source eNB according to the allocated Measurement ID as well as the corresponding relationship between the allocated Measurement ID and the source eNB stored in the context information.

5. The method as claimed in claim 3, wherein the sending, by the DeNB, the resource status information carring the allocated Measurement ID of the source eNB to the source eNB according to the address of the source eNB comprises:
if the cell information to be reported corresponds to multiple RNs, the DeNB setting up uniform resource status information according to respective resource status information from the multiple RNs and sending the uniform resource status information to the source eNB according to the address of the eNB; or,
if the cell information to be reported corresponds to one RN, the DeNB sending the resource status information from the RN directly to the source eNB according to the address of the eNB.

6. The method as claimed in claim 2, wherein:
if the cell information to be reported corresponds to multiple RNs, a Measurement ID is allocated to each RN when the DeNB allocates the Measurement ID to the source eNB, wherein the corresponding relationships between the allocated Measurement IDs and the Measurement ID of the source eNB stored in the context information are respective relationships between the allocated Measurement ID of the source eNB and respective Measurement IDs allocated to respective RNs; or,
if the cell information to be reported corresponds to one RN, a Measurement ID is allocated to the RN when the DeNB allocates the Measurement ID to the source eNB, wherein the corresponding relationship between the allocated Measurement ID and Measurement ID corresponding to the Measurement ID allocated to the source eNB stored in the context information is a relationship between the Measurement ID of the source eNB and the Measurement ID allocated to the RN.

7. The method as claimed in claim 1, wherein the sending, by the DeNB, the resource status request message carring the Measurement ID to RN comprises:
if the cell information to be reported corresponds to multiple RNs, the DeNB setting up a resource status request message corresponding to each RN according to a resource status request message from the source eNB and sending a corresponding resource status request message to each RN respectively; or,
If the cell information to be reported corresponds to one RN, the DeNB sending a resource status request message from the source eNB directly to the RN.

8. The method as claimed in any one of claims 3∼6, wherein the resource status information includes: a resource status response message or a resource status report.

9. An apparatus for realizing a resource status exchanging procedure in a Long Term Evolution Advanced, LTE-A, system where one or more Relay Nodes, RNs, are connected with a source evolved Node B, eNB, via a Donor evolved Node B, DeNB, the apparatus is **characterized by** comprising:
a reception module (11), which is configured to receive a resource status request message from the source evolved Node B, eNB, wherein the resource status request message includes cell information to be reported, wherein the source eNB refers to a sender eNB who sends out the resource status request message, and wherein the cell information refers to state information about a cell where the source eNB is located;
a processing module (14), which is configured to allocate a Measurement ID to the source eNB in accordance with the resource status request message received by the reception module, and establish context information for the source eNB, wherein the context information stores therein a corresponding relationship between the allocated Measurement IDs and the source eNB; and
a sending module (13), which is configured to send the resource status request message carrying the Measurement ID to the one or more RNs.

10. The apparatus as claimed in claim 9, wherein the context information further stores therein a corresponding relationship between the allocated Measurement ID and a Measurement ID corresponding to the Measurement ID allocated to the source eNB.

11. The apparatus as claimed in claim 10, wherein the apparatus further includes an acquisition module (12);
the reception module is further configured to receive resource status information from the RN, wherein the resource status information carries the allocated Measurement ID;
the acquisition module is configured to acquire an address of the source eNB according to the resource status information and the context information received by the reception module; and
the sending module is further configured to send the resource status information carrying the allocated Measurement ID of the source eNB to the source eNB according to the address of the source eNB acquired by the acquisition module.

12. The apparatus as claimed in claim 11, wherein
the acquisition module is configured to acquire the allocated Measurement ID according to the resource status information, and to acquire the address of the source eNB according to the allocated Measurement ID as well as the corresponding relationship between the allocated Measurement ID and the source eNB stored in the context information.

13. The apparatus as claimed in claim 11, wherein
if the cell information to be reported corresponds to multiple RNs, the sending module is configured to set up uniform resource status information according to respective resource status information from the multiple RNs and send the uniform resource status information to the source eNB according to the address of the eNB; or,
if the cell information to be reported corresponds to one RN, the sending module is configured to send the resource status information from the RN directly to the source eNB according to the address of the eNB.

14. The apparatus as claimed in claim 10, wherein
if the cell information to be reported corresponds to multiple RNs, a Measurement ID is allocated to each RN when the DeNB allocates the Measurement ID to the source eNB, wherein the corresponding relationships between the allocated Measurement ID of the source eNB stored in the context information are respective relationships between the allocated Measurement ID of the source eNB and respective Measurement IDs allocated to respective RNs; or,
if the cell information to be reported corresponds to one RN, a Measurement ID is allocated to the RN when the DeNB allocates the Measurement ID to the source eNB, wherein the corresponding relationship between the allocated Measurement ID and Measurement ID corresponding to the Measurement ID allocated to the source eNB stored in the context information is a relationship between the Measurement ID of the source eNB and the Measurement ID allocated to the RN.

15. The apparatus as claimed in claim 9, wherein
if the cell information to be reported corresponds to multiple RNs, the sending module is configured to set up a resource status request message corresponding to each RN according to a resource status request message from the source eNB, and send a corresponding resource status request message to each RN respectively; or,
if the cell information to be reported corresponds to one RN, the sending module is configured to send a resource status request message from the source eNB directly to the RN.

16. A method for realizing a resource status exchanging procedure in a Long Term Evolution Advanced, LTE-A, system where one or more Relay Nodes, RNs, are connected with a source evolved Node B, eNB, via a Donor evolved Node B, DeNB, the method is **characterized by** comprising:
acquiring (S505), by the eNB, a resource status request message, wherein the resource status request message includes cell information to be reported, wherein the source eNB refers to a sender eNB who sends out the resource status request message, and wherein the cell information refers to state information about a cell where the source eNB is located;
sending (S501), by the source eNB, the resource status request message to the DeNB; and
receiving (S506), by the source eNB, resource status information returned by the DeNB according to context information,
wherein the DeNB allocates a Measurement ID to the source eNB according to the resource status request message, wherein the DeNB establishes the context information for the source eNB, and wherein the context information stores therein the corresponding relationship between the allocated Measurement ID and the source eNB.

17. The method as claimed in claim 16, wherein the acquiring, by a source evolved Node B, eNB, a resource status request message, comprising:
acquiring, by the source eNB, the cell information to be reported for all RNs and setting up a resource status request message for the cell information to be reported corresponding to all RNs; or,
acquiring, by the source eNB, the cell information to be reported for each RN and setting up the resource status request message for the cell information to be reported corresponding to each RN respectively.

18. An apparatus for realizing a resource status exchanging procedure in a Long Term Evolution Advanced, LTE-A, system where one or more Relay Nodes, RNs, are connected with a source evolved Node B, eNB, via a Donor evolved Node B, DeNB, the apparatus is **characterized by** comprising:
an acquisition module (21), which is configured to acquire a resource status request message, wherein the resource status request message includes cell information to be reported, wherein the source eNB refers to a sender eNB who sends out the resource status request message, and wherein the cell information refers to state information about a cell where the source eNB is located;
a sending module (22), which is configured to send the resource status request message acquired by the acquisition module to the DeNB; and
a reception module (23), which is configured to receive resource status information returned by the DeNB according to context information,
wherein the DeNB allocates a Measurement ID to the source eNB according to the resource status request message, wherein the DeNB establishes the context information for the source eNB, and wherein the context information stores therein the corresponding relationship between the allocated Measurement ID and the source eNB.

19. The apparatus as claimed in claim 18, wherein
the acquisition module is configured to acquire the cell information to be reported for all RNs and set up a resource status request message for the cell information to be reported corresponding to all RNs; or,
the acquisition module is configured to acquire the cell information to be reported for each RN and set up the resource status request message for the cell information to be reported to each RN respectively.

## Patentansprüche

1. Verfahren zur Durchführung eines Ressourcenstatusaustauschvorgangs in einem Long Term Evolution Advanced, LTE-A, System, bei dem ein oder mehrere Relaisknoten, RK, mit einem Quellen-entwickelten Knoten B, eKB, über einen Donor-entwickelten Knoten B, DeKB, verbunden sind, das Verfahren ist **dadurch gekennzeichnet, dass** es folgendes umfasst:
Empfangen (S501) einer Ressourcenstatusanforderungsnachricht von der Quelle eKB durch den DeKB, wobei die Ressourcenstatusanforderungsnachricht eine zu meldende Zellinformation enthält, wobei sich die Quelle eKB auf einen Sender eKB bezieht, der die Ressourcenstatusanforderungsnachricht sendet, und wobei sich die Zellinformation auf eine Zustandsinformation über eine Zelle bezieht, in der sich die Quelle eKB befindet;
Zuweisen (S502) einer Mess-Kennung durch den DeKB an die Quelle eKB in Übereinstimmung mit der Ressourcenstatusanforderungsnachricht;
Erstellen (S502) einer Kontextinformation durch den DeKB für die Quelle eKB, wobei die Kontextinformation eine entsprechende Beziehung zwischen den zugeordneten Mess-Kennungen und der Quelle eKB speichert; und
Senden (S503) der Ressourcenstatusanforderungsnachricht, die die Mess-Kennung zu einem oder mehreren RK trägt, durch den DeKB.

2. Verfahren nach Anspruch 1, wobei die Kontextinformation ferner eine entsprechende Beziehung zwischen der zugeordneten Mess-Kennung und einer Mess-Kennung entsprechend der der Quelle eKB zugeordneten Mess-Kennung speichert.

3. Verfahren nach Anspruch 2, wobei das Verfahren nach dem Senden der Ressourcenstatusanforderungsnachricht, die die Mess-Kennung an den RK trägt, durch den DeKB weiterhin umfasst:
Empfangen einer Ressourcenstatusinformation vom RK durch den DeKB, wobei die Ressourcenstatusinformation die zugeordnete Mess-Kennung trägt;
Erfassen einer Adresse der Quelle eKB durch den DeKB gemäß der Ressourcenstatusinformation und der Kontextinformation; und
Senden der Ressourcenstatusinformation, die die zugeordnete Mess-Kennung der Quelle eKB trägt, durch den DeKB an die Quelle eKB gemäß der Adresse der Quelle eKB.

4. Verfahren nach Anspruch 3, wobei das Erfassen der Adresse der Quelle eKB durch den DeKB gemäß der Ressourcenstatusinformation und der Kontextinformation umfasst:
Erfassen der zugewiesenen Mess-Kennung durch den DeKB gemäß der Ressourcenstatusinformation und Erfassen der Adresse der Quelle eKB gemäß der zugewiesenen Mess-Kennung sowie der entsprechenden Beziehung zwischen der zugewiesenen Mess-Kennung und der in der Kontextinformation gespeicherten Quelle eKB.

5. Verfahren nach Anspruch 3, wobei das Senden der Ressourcenstatusinformation durch den DeKB, die die zugeordnete Mess-Kennung der Quelle eKB zu der Quelle eKB gemäß der Adresse der Quelle eKB trägt, umfasst:
wenn die zu meldende Zellinformation mehreren RK entspricht, richtet der DeKB eine einheitliche Ressourcenstatusinformation gemäß der jeweiligen Ressourcenstatusinformation der mehreren RK ein und sendet die einheitliche Ressourcenstatusinformation an die Quelle eKB gemäß der Adresse der eKB; oder,
wenn die zu meldende Zellinformation einer RK entspricht, sendet der DeKB die Ressourcenstatusinformation von dem RK direkt an die Quelle eKB gemäß der Adresse der eKB.

6. Verfahren nach Anspruch 2, wobei:
wenn die zu meldende Zellinformation mehreren RK entspricht, wird jedem RK eine Mess-Kennung zugeordnet, wenn der DeKB der Quelle eKB die Mess-Kennung zuordnet, wobei die entsprechenden Beziehungen zwischen den zugeordneten Mess-Kennungen und der in der Kontextinformation gespeicherten Mess-Kennung der Quelle eKB jeweils Beziehungen zwischen der zugeordneten Mess-Kennung der Quelle eKB und den jeweiligen Mess-Kennungen sind, die den jeweiligen RK zugeordnet sind; oder,
wenn die zu meldende Zellinformation einem RK entspricht, wird dem RK eine Mess-Kennung zugeordnet, wenn der DeKB der Quelle eKB die Mess- Kennung zuordnet, wobei die entsprechende Beziehung zwischen der zugeordneten Mess-Kennung und der Mess-Kennung, die der in der Kontextinformation gespeicherten Mess-Kennung der Quelle eKB entspricht, eine Beziehung zwischen der Mess-Kennung der Quelle eKB und der dem RK zugeordneten Mess-Kennung ist.

7. Verfahren nach Anspruch 1, wobei das Senden der Ressourcenstatusanforderungsnachricht, die die Mess-Kennung zum RK trägt, durch den DeKB umfasst:
wenn die zu meldende Zellinformation mehreren RK entspricht, richtet der DeKB eine Ressourcenstatusanforderungsnachricht entsprechend einer Ressourcenstatusanforderungsnachricht von der Quelle eKB ein und sendet eine entsprechende Ressourcenstatusanforderungsnachricht jeweils an jeden RK; oder,
wenn die zu meldende Zellinformation einem RK entspricht, sendet der DeKB eine Ressourcenstatusanforderungsnachricht von der Quelle eKB direkt an den RK.

8. Das Verfahren nach einem der Ansprüche 3-6, wobei die Ressourcenstatusinformation umfasst: eine Ressourcensstatusantwortnachricht oder einen Ressourcenstatusbericht.

9. Vorrichtung zur Durchführung eines Ressourcenstatusaustauschvorgangs in einem Long Term Evolution Advanced, LTE-A, System, bei dem ein oder mehrere Relaisknoten, RK, mit einem Quellen-entwickelten Knoten B, eKB, über einen Donor-entwickelten Knoten B, DeKB, verbunden sind, die Vorrichtung ist **dadurch gekennzeichnet, dass** sie folgendes umfasst:
ein Empfangsmodul (11), das so ausgebildet ist, dass es eine Ressourcenstatusanforderungsnachricht von dem Quellen-entwickelten Knoten B, eKB, empfängt, wobei die Ressourcenstatusanforderungsnachricht eine zu meldende Zellinformation enthält, wobei sich die Quelle eKB auf einen Sender eKB bezieht, der die Ressourcenstatusanforderungsnachricht sendet, und wobei sich die Zellinformation auf eine Zustandsinformationen über eine Zelle bezieht, wo sich die Quelle eKB befindet;
ein Verarbeitungsmodul (14), das ausgebildet ist, um der Quelle eKB gemäß der vom Empfangsmodul empfangenen Ressourcenstatusanforderungsnachricht eine Mess-Kennung zuzuweisen und eine Kontextinformation für die Quelle eKB zu erstellen, wobei die Kontextinformation eine entsprechende Beziehung zwischen den zugeordneten Mess-Kennungen und der Quelle eKB speichern; und
ein Sendemodul (13), das so ausgebildet ist, dass es die Ressourcenstatusanforderungsnachricht sendet, die die Mess-Kennung einer oder mehrerer RK trägt.

10. Vorrichtung nach Anspruch 9, wobei die Kontextinformation ferner eine entsprechende Beziehung zwischen der zugeordneten Mess-Kennung und einer Mess-Kennung entsprechend der der Quelle eKB zugeordneten Mess-Kennung speichert.

11. Vorrichtung nach Anspruch 10, wobei die Vorrichtung ferner ein Erfassungsmodul (12) umfasst;
das Empfangsmodul ferner so ausgebildet ist, dass es eine Ressourcenstatusinformation vom RK empfängt, wobei die Ressourcenstatusinformation die zugeordnete Mess-Kennung trägt;
das Erfassungsmodul so ausgebildet ist, dass es eine Adresse der Quelle eKB gemäß der Ressourcenstatusinformation und der vom Empfangsmodul empfangenen Kontextinformation erfasst; und
das Sendemodul ferner so ausgebildet ist, dass es die Ressourcenstatusinformation, die die zugewiesene Mess-Kennung der Quelle eKB trägt, an die Quelle eKB entsprechend der vom Erfassungsmodul erfassten Adresse der Quelle eKB sendet.

12. Vorrichtung nach Anspruch 11, wobei
das Erfassungsmodul so ausgebildet ist, dass es die zugewiesene Mess-Kennung gemäß der Ressourcenstatusinformation erfasst und die Adresse der Quelle eKB gemäß der zugewiesenen Mess-Kennung sowie die entsprechende Beziehung zwischen der zugewiesenen Mess-Kennung und der in der Kontextinformation gespeicherten Quelle eKB erfasst.

13. Vorrichtung nach Anspruch 11, wobei
wenn die zu meldende Zellinformation mehreren RK entspricht, ist das Sendemodul so ausgebildet, dass es eine einheitliche Ressourcenstatusinformation entsprechend der jeweiligen Ressourcenstatusinformation der mehreren RK einrichtet und die einheitliche Ressourcenstatusinformation entsprechend der Adresse der eKB an die Quelle eKB sendet; oder,
wenn die zu meldende Zelleninformation einem RK entspricht, ist das Sendemodul so ausgebildet, dass es die Ressourcenstatusinformationen vom RK direkt an die Quelle eKB entsprechend der Adresse des eKB sendet.

14. Vorrichtung nach Anspruch 10, wobei
wenn die zu meldende Zellinformation mehreren RK entspricht, wird jedem RK eine Mess-Kennung zugeordnet, wenn der DeKB der Quelle eKB die Mess-Kennung zuordnet, wobei die entsprechenden Beziehungen zwischen der zugeordneten Mess-Kennung und der in der Kontextinformation gespeicherten Mess-Kennung der Quelle eKB jeweils Beziehungen zwischen der zugeordneten Mess-Kennung der Quelle eKB und den jeweiligen Mess-Kennungen sind, die den jeweiligen RK zugeordnet sind; oder,
wenn die zu meldende Zellinformation einem RK entspricht, wird dem RK eine Mess-Kennung zugeordnet, wenn der DeKB der Quelle eKB die Mess-Kennung zuordnet, wobei die entsprechende Beziehung zwischen der zugeordneten Mess-Kennung und der Mess-Kennung, die der in der Kontextinformation gespeicherten Mess-Kennung der Quelle eKB entspricht, eine Beziehung zwischen der Mess-Kennung der Quelle eKB und der dem RK zugeordneten Mess-Kennung ist.

15. Vorrichtung nach Anspruch 9, wobei
wenn die zu meldende Zellinformation mehreren RK entspricht, ist das Sendemodul so ausgebildet, dass es eine Ressourcenstatusanforderungsnachricht entsprechend einer Ressourcenstatusanforderungsnachricht von der Quelle eKB einrichtet und eine entsprechende Ressourcenstatusanforderungsnachricht jeweils an jeden RK sendet; oder,
wenn die zu meldende Zellinformation einem RK entspricht, ist das Sendemodul so ausgebildet, dass es eine Ressourcenstatusanforderungsnachricht von der Quelle eKB direkt an den RK sendet.

16. Verfahren zur Durchführung eines Ressourcenstatusaustauschvorgangs in einem Long Term Evolution Advanced, LTE-A, System, bei dem ein oder mehrere Relaisknoten, RK, mit einem Quellen-entwickelten Knoten B, eKB, über einen Donor-entwickelten Knoten B, DeKB, verbunden sind, das Verfahren ist **dadurch gekennzeichnet, dass** es folgendes umfasst:
Erfassen (S505) einer Ressourcenstatusanforderungsnachricht durch den eKB, wobei die Ressourcenstatusanforderungsnachricht eine zu meldende Zellinformation enthält, wobei sich die Quelle eKB auf einen Sender eKB bezieht, der die Ressourcenstatusanforderungsnachricht sendet, und wobei sich die Zellinformation auf eine Zustandsinformation über eine Zelle bezieht, in der sich die Quelle eKB befindet;
Senden (S501) der Ressourcenstatusanforderungsnachricht durch die Quelle eKB an den DeKB; und
Empfangen (S506) der vom DeKB zurückgegebenen Ressourcenstatusinformation gemäß der Kontextinformation durch die Quelle eKB,
wobei der DeKB der Quelle eKB gemäß der Ressourcenstatusanforderungsnachricht eine Mess-Kennung zuweist, wobei der DeKB die Kontextinformation für die Quelle eKB ermittelt und wobei die Kontextinformation die entsprechende Beziehung zwischen der zugeordneten Mess-Kennung und der Quelle eKB speichert.

17. Verfahren nach Anspruch 16, wobei das Erfassen einer Ressourcenstatusanforderungsnachricht durch einen Quellen-entwickelten Knoten B, eKB, umfasst:
Erfassen der zu meldenden Zellinformation für alle RK durch die Quelle eKB und Einrichten einer Ressourcenstatusanforderungsmeldung für die zu meldende Zellinformation entsprechend allen RK; oder,
Erfassen der zu meldenden Zellinformation für jede RK durch die Quelle eKB und Einrichten der Ressourcenstatusanforderungsmeldung für die zu meldende Zellinformation entsprechend der jeweiligen RK.

18. Vorrichtung zur Durchführung eines Ressourcenstatusaustauschvorgangs in einem Long Term Evolution Advanced, LTE-A, System, bei dem ein oder mehrere Relaisknoten, RK, mit einem Quellen-entwickelten Knoten B, eKB, über einen Donor-entwickelten Knoten B, DeKB, verbunden sind, die Vorrichtung ist **dadurch gekennzeichnet, dass** sie folgendes umfasst
ein Erfassungsmodul (21), das ausgebildet ist, um eine Ressourcenstatusanforderungsnachricht zu erfassen, wobei die Ressourcenstatusanforderungsnachricht eine zu meldende Zellinformation enthält, wobei sich die Quelle eKB auf einen Sender eKB bezieht, der die Ressourcenstatusanforderungsnachricht sendet, und wobei sich die Zellinformation auf eine Zustandsinformation über eine Zelle bezieht, in der sich die Quelle eKB befindet;
ein Sendemodul (22), das so ausgebildet ist, dass es die vom Erfassungsmodul erfasste Ressourcenstatusanforderungsnachricht an den DeKB sendet; und
ein Empfangsmodul (23), das so ausgebildet ist, dass es eine Ressourcenstatusinformation empfängt, die vom DeKB gemäß der Kontextinformation zurückgegeben wird,
wobei der DeKB der Quelle eKB gemäß der Ressourcenstatusanforderungsnachricht eine Mess-Kennung zuweist, wobei der DeKB die Kontextinformation für die Quelle eKB ermittelt und wobei die Kontextinformation die entsprechende Beziehung zwischen der zugeordneten Mess-Kennung und der Quelle eKB speichert.

19. Vorrichtung nach Anspruch 18, wobei
das Erfassungsmodul so ausgebildet ist, dass es die zu meldende Zellinformation für alle RK erfasst und eine Ressourcenstatusanforderungsmeldung für die zu meldende Zellinformation entsprechend zu allen RK einrichtet; oder,
das Erfassungsmodul so ausgebildet ist, dass es die zu meldende Zellinformation für jeden RK erfasst und die Ressourcenstatusanforderungsmeldung für die zu meldende Zelleninformation für jede RK einrichtet.

## Revendications

1. Une méthode pour réaliser une procédure d'échange d'état de ressource dans un système Evolution à long terme, LTE-A, dans laquelle un ou plusieurs Noeuds de relais, RNs, sont connectés à un noeud source évolué B, eNB, via un Noeud donneur évolué B, DeNB, la méthode est **caractérisée en ce qu'**elle comprend:
recevoir (S501), par le DeNB, un message de demande d'état de ressource du source eNB, dans laquelle le message de demande d'état de ressource comprend information de cellule à signaler, dans laquelle le source eNB fait référence à un émetteur eNB qui envoie le message de demande d'état de ressource, et dans laquelle l'information de cellule fait référence à information d'état concernant une cellule où se trouve le source eNB;
allouer (S502), par le DeNB, un ID de mesure au source eNB conformément au message de demande d'état de ressource;
établir (S502), par le DeNB, information de contexte pour le source eNB, dans laquelle l'information de contexte stocke une relation correspondante entre les IDs de mesure alloués et le source eNB; et
envoyer (S503), par le DeNB, le message de demande d'état de ressource portant l'ID de mesure à l'un ou plusieurs RNs.

2. La méthode selon la revendication 1, dans laquelle l'information de contexte stocke en outre une relation correspondante entre l'ID de mesure alloué et un ID de mesure correspondant à l'ID de mesure alloué au source eNB.

3. La méthode selon la revendication 2, dans laquelle après avoir envoyé, par le DeNB, le message de demande d'état de ressource portant l'ID de mesure au RN, la méthode comprend en outre:
recevoir, par le DeNB, information d'état de ressource provenant du RN, dans laquelle l'information d'état de ressource porte l'ID de mesure alloué;
acquérir, par le DeNB, une adresse du source eNB sur la base de l'information d'état de ressource et l'information de contexte; et
envoyer, par le DeNB, l'information d'état de ressource portant l'ID de mesure alloué du source eNB au source eNB sur la base de l'adresse du source eNB.

4. La méthode selon la revendication 3, dans laquelle le acquérir, par le DeNB, l'adresse du source eNB sur la base de l'information d'état de ressource et l'information de contexte comprend:
acquérir, par le DeNB, l'ID de mesure alloué sur la base de l'information d'état de ressource, et acquérir l'adresse du source eNB sur la base de l'ID de mesure alloué ainsi que la relation correspondante entre l'ID de mesure alloué et le source eNB stocké dans l'information de contexte.

5. La méthode selon la revendication 3, dans laquelle le envoyer, par le DeNB, l'information d'état de ressource portant l'ID de mesure alloué du source eNB au source eNB sur la base de l'adresse du source eNB comprend:
si l'information de cellule à signaler correspond à multiples RNs, le DeNB établissant information d'état de ressource uniforme en fonction d'information d'état de ressource respective provenant de multiples RNs et envoyer l'information d'état de ressource uniforme au source eNB sur la base de l'adresse du eNB; ou, si l'information de cellule à signaler correspond à un RN, le DeNB envoie l'information d'état de ressource provenant du RN directement au source eNB sur la base de l'adresse du eNB.

6. La méthode selon la revendication 2, dans laquelle:
si l'information de cellule à signaler correspond à multiples RNs, un ID de mesure est alloué à chaque RN lorsque le DeNB alloue l'ID de mesure au source eNB, dans laquelle les relations correspondantes entre les IDs de mesure alloués et l'ID de mesure du source eNB stocké dans l'information de contexte sont des relations respectives entre l'ID de mesure alloué du source eNB et des IDs de mesures alloués respectifs à des RNs respectifs; ou,
si l'information de cellule à signaler correspond à un RN, un ID de mesure est alloué au RN lorsque le DeNB alloue l'ID de mesure au source eNB, dans laquelle la relation correspondante entre l'ID de mesure alloué et ID de mesure correspondant à l'ID de mesure alloué au source eNB stocké dans l'information de contexte est une relation entre l'ID de mesure du source eNB et l'ID de mesure alloué au RN.

7. La méthode selon la revendication 1, dans laquelle le envoyer, par le DeNB, le message de demande d'état de ressource portant l'ID de mesure to RN comprend:
si l'information de cellule à signaler correspond à multiples RNs, le DeNB établissant un message de demande d'état de ressource correspondant à chaque RN en fonction de un message de demande d'état de ressource da la source eNB et envoyant un message de demande d'état de ressource correspondant à chaque RN respectivement; ou,
si l'information de cellule à signaler correspond à un RN, le DeNB envoyant un message de demande d'état de ressource da la source eNB directement au RN.

8. La méthode selon l'une quelconque des revendications 3-6, dans laquelle l'information d'état de ressource comprend: un message de réponse d'état de ressource ou un rapport d'état de ressource.

9. Un appareil pour réaliser une procédure d'échange d'état de ressource dans un système Evolution à long terme, LTE-A, dans lequel un ou plusieurs Noeuds de relais, RNs, sont connectés à un noeud source évolué B, eNB, via un Noeud donneur évolué B, DeNB, l'appareil est **caractérisé en ce qu'**il comprend:
un module de réception (11), configuré pour recevoir un message de demande d'état de ressource provenant du noeud source évolué B, eNB, dans lequel le message de demande d'état de ressource comprend information de cellule à signaler, dans lequel le source eNB fait référence à un émetteur eNB qui envoie le message de demande d'état de ressource, et dans lequel l'information de cellule fait référence à information d'état concernant une cellule où se trouve le source eNB;
un module de traitement (14), configuré pour allouer un ID de mesure au source eNB conformément au message de demande d'état de ressource reçu par le module de réception, et établir information de contexte pour le source eNB, dans lequel l'information de contexte stocke une relation correspondante entre les IDs de mesure alloués et le source eNB; et
un module d'envoi (13), configuré pour envoyer le message de demande d'état de ressource portant l'ID de mesure à l'un ou plusieurs RNs.

10. L'appareil selon la revendication 9, dans lequel l'information de contexte stocke en outre une relation correspondante entre l'ID de mesure alloué et un ID de mesure correspondant à l'ID de mesure alloué au source eNB.

11. L'appareil selon la revendication 10, dans lequel l'appareil comprend en outre an module d'acquisition (12);
le module de réception est configuré en outre pour recevoir information d'état de ressource provenant du RN, dans lequel l'information d'état de ressource porte l'ID de mesure alloué;
le module d'acquisition est configuré pour acquérir une adresse du source eNB sur la base de l'information d'état de ressource et l'information de contexte reçue par le module de réception; et
le module d'envoi est configuré en outre pour envoyer l'information d'état de ressource portant l'ID de mesure alloué du source eNB au source eNB sur la base de l'adresse du source eNB acquise par le module d'acquisition.

12. L'appareil selon la revendication 11, dans lequel
le module d'acquisition est configuré pour acquérir l'ID de mesure alloué sur la base de l'information d'état de ressource, et acquérir l'adresse du source eNB sur la base de l'ID de mesure alloué ainsi que la relation correspondante entre l'ID de mesure alloué et le source eNB stocké dans l'information de contexte.

13. L'appareil selon la revendication 11, dans lequel
si l'information de cellule à signaler correspond à multiples RNs, le module d'envoi est configuré pour définir information d'état de ressource uniforme en fonction d'information d'état de ressource respective provenant de multiples RNs et envoyer l'information d'état de ressource uniforme au source eNB sur la base de l'adresse du eNB; ou,
si l'information de cellule à signaler correspond à un RN, le module d'envoi est configuré pour envoyer l'information d'état de ressource provenant du RN directement au source eNB sur la base de l'adresse du eNB.

14. L'appareil selon la revendication 10, dans lequel
si l'information de cellule à signaler correspond à multiples RNs, un ID de mesure est alloué à chaque RN lorsque le DeNB alloue l'ID de mesure au source eNB, dans lequel les relations correspondantes entre l'ID de mesure alloué du source eNB stocké dans l'information de contexte sont des relations respectives entre l'ID de mesure alloué du source eNB et des IDs de mesures alloués respectifs à des RNs respectifs; ou,
si l'information de cellule à signaler correspond à un RN, un ID de mesure est alloué au RN lorsque le DeNB alloue l'ID de mesure au source eNB, dans lequel la relation correspondante entre l'ID de mesure alloué et ID de mesure correspondant à l'ID de mesure alloué au source eNB stocké dans l'information de contexte est une relation entre l'ID de mesure du source eNB et l'ID de mesure alloué au RN.

15. L'appareil selon la revendication 9, dans lequel
si l'information de cellule à signaler correspond à multiples RNs, le module d'envoi est configuré pour définir un message de demande d'état de ressource correspondant à chaque RN en fonction de un message de demande d'état de ressource da la source eNB, et envoyer un message de demande d'état de ressource correspondant à chaque RN respectivement; ou,
si l'information de cellule à signaler correspond à un RN, le module d'envoi est configuré pour envoyer un message de demande d'état de ressource da la source eNB directement au RN.

16. Une méthode pour réaliser une procédure d'échange d'état de ressource dans un système Evolution à long terme, LTE-A, dans laquelle un ou plusieurs Noeuds de relais, RNs, sont connectés à un noeud source évolué B, eNB, via un Noeud donneur évolué B, DeNB, la méthode est **caractérisée en ce qu'**elle comprend:
acquérir (S505), par le eNB, un message de demande d'état de ressource, dans laquelle le message de demande d'état de ressource comprend information de cellule à signaler, dans laquelle le source eNB fait référence à un émetteur eNB qui envoie le message de demande d'état de ressource, et dans laquelle l'information de cellule fait référence à information d'état concernant une cellule où se trouve le source eNB;
envoyer (S501), par le source eNB, le message de demande d'état de ressource au DeNB; et
recevoir (S506), par le source eNB, information d'état de ressource renvoyées par le DeNB en fonction d'information de contexte,
dans laquelle le DeNB alloue un ID de mesure au source eNB sur la base du message de demande d'état de ressource, dans laquelle le DeNB établit l'information de contexte pour le source eNB, et dans laquelle l'information de contexte stocke la relation correspondante entre l'ID de mesure alloué et le source eNB.

17. La méthode selon la revendication 16, dans lequel le acquérir, par un noeud source évolué B, eNB, un message de demande d'état de ressource, comprend:
acquérir, par le source eNB, l'information de cellule à signaler pour tous RNs et établir un message de demande d'état de ressource pour l'information de cellule à signaler correspondante à tous RNs; ou,
acquérir, par le source eNB, l'information de cellule à signaler pour chaque RN et établir le message de demande d'état de ressource pour l'information de cellule à signaler correspondante à chaque RN respectivement.

18. Un appareil pour réaliser une procédure d'échange d'état de ressource dans un système Evolution à long terme, LTE-A, dans lequel un ou plusieurs Noeuds de relais, RNs, sont connectés à un noeud source évolué B, eNB, via un Noeud donneur évolué B, DeNB, l'appareil est **caractérisé en ce qu'**il comprend:
un module d'acquisition (21), configuré pour acquérir un message de demande d'état de ressource, dans lequel le message de demande d'état de ressource comprend information de cellule à signaler, dans lequel le source eNB fait référence à un émetteur eNB qui envoie le message de demande d'état de ressource, et dans lequel l'information de cellule fait référence à information d'état concernant une cellule où se trouve le source eNB;
un module d'envoi (22), configuré pour envoyer le message de demande d'état de ressource acquise par le module d'acquisition au DeNB; et
un module de réception (23), configuré pour recevoir information d'état de ressource renvoyées par le DeNB en fonction d'information de contexte,
dans lequel le DeNB alloue un ID de mesure au source eNB sur la base du message de demande d'état de ressource, dans lequel le DeNB établit l'information de contexte pour le source eNB, et dans lequel l'information de contexte stocke la relation correspondante entre l'ID de mesure alloué et le source eNB.

19. L'appareil selon la revendication 18, dans lequel
le module d'acquisition est configuré pour acquérir l'information de cellule à signaler pour tous RNs et établir un message de demande d'état de ressource pour l'information de cellule à signaler correspondante à tous RNs; ou,
le module d'acquisition est configuré pour acquérir l'information de cellule à signaler pour chaque RN et établir le message de demande d'état de ressource pour l'information de cellule à signaler à chaque RN respectivement.
